# EUROPEAN PATENT APPLICATION

(11) **EP 3 549 840 A1**
(43) Date of publication of application: **09.10.2019**
(21) Application number: 19166321.0
(22) Date of filing: 29.03.2019
(51) Int. Cl.: B60W 50/12, B60W 50/14, B60K 28/14, E05B 77/24, B60W 30/09

(54) **A COLLISION AVOIDANCE SYSTEM AND METHOD**

(30) Priority: 05.04.2018 GB 201805597
(71) Applicant: Ford Global Technologies, LLC, Dearborn, MI 48126-2738 (US)
(72) Inventor:
(74) Representative: Haseltine Lake Kempner LLP

(57) **Abstract**

A collision avoidance system for a vehicle comprises a controller configured to analyse if at least one risk parameter is within an acceptable level to determine when the vehicle is being operated at a risk to pedestrians and, if it is determined that the at least one risk parameter is over the acceptable level, check for pedestrians in the vicinity of the vehicle and, in response to a determination that there are pedestrians in the vicinity of the vehicle, issue an alert to the driver, and if the driver takes a course of action so as to reduce the at least one risk parameter to within the acceptable level, not intervene so as to allow the driver manual control of the vehicle, and if the driver does not take a course of action so as to reduce the at least one risk parameter to within the acceptable level, override manual control of the vehicle to slow the vehicle or bring the vehicle to a stop.

## Description

The present invention relates to a collision avoidance system and method for a vehicle.

### Background

At times vehicles have, either intentionally or inadvertently, collided with pedestrians, and sometimes vehicles have, either intentionally or inadvertently, been driven into crowds of people. Improvements are therefore desired in the art of collision avoidance systems.

### Statements of Invention

According to the present invention there is provided a collision avoidance system for a vehicle, such as a motor vehicle, comprising a controller configured to analyse if at least one risk parameter is within an acceptable level (for example to determine when the vehicle is being operated at a risk to pedestrians) and, if it is determined that the at least one risk parameter is over the acceptable level; check for pedestrians in the vicinity of the vehicle; and, in response to a determination that there are pedestrians in the vicinity of the vehicle, issue an alert to the driver; and, if the driver takes a course of action so as to reduce the at least one risk parameter to within the acceptable level, not intervene so as to allow the driver manual control of the vehicle; or if the driver does not take a course of action so as to reduce the at least one risk parameter to within the acceptable level, override manual control of the vehicle to slow the vehicle or bring the vehicle to a stop.

According to the invention there is also provided a method of preventing a collision, the method comprising analysing if at least one risk parameter is within an acceptable level (for example to determine when the vehicle is being operated at a risk to pedestrians), and, if it is determined that the at least one risk parameter is over the acceptable level; checking for pedestrians in the vicinity of the vehicle, and in response to a determination that there are pedestrians in the vicinity of the vehicle, issuing an alert to the driver; and, if the driver does not take a course of action so as to reduce the at least one risk parameter to within the acceptable level, overriding manual control of the vehicle to slow the vehicle or bring the vehicle to a stop.

This allows driver control of the vehicle to be overridden when it is determined that the vehicle is being operated at a risk to pedestrians. The risk parameter may be linked to the vehicle being operated at risk and hence if the risk parameter exceeds acceptable levels then the system determines that the vehicle itself is being operated at risk. Performing a check for pedestrians when the risk parameter is above an acceptable level means the system will not intervene when there is a low possibility of pedestrian injuries, i.e. when there are no pedestrians present.

For example the driver of the vehicle may be conscious of the fact that they are driving in (what would under usual circumstances be considered to be) a dangerous manner, but they may be doing so in the absence of any pedestrians or vehicles, for example on an empty road or a private residence. The system would not intervene in this instance since, although a risk parameter is detected as being at an unacceptable level, the presence of pedestrians would not be detected.

The risk parameter may be at least one of: (i) the proximity of the vehicle to an urban area; (ii) whether the vehicle is within the local speed limit; and (iii) whether the vehicle is within the lane markings on the road.

This allows the system to monitor at least one of whether the driver of the vehicle is speeding, whether the vehicle is in an area where pedestrian presence is expected, and whether the driver is departing from the lane markings. Accordingly, the system may check for pedestrians if at least one of the following is satisfied: the vehicle is being in an urban area, the vehicle is outside of the local speed limit, and the vehicle is departing from the road lane markings. If the vehicle is being operated in this way then it may be determined that the vehicle could be at risk to pedestrians and so the system can check to see if any pedestrians are actually present. If pedestrians are present then the system may intervene.

The alert to the driver may comprise a recommended course of action. For example, the alert to the driver may comprise a request to reduce the speed of the vehicle.

If the system detects that the vehicle is being driven at risk (by determining that at least one risk parameter is not within an acceptable level) and that there are pedestrians in the vicinity of the vehicle then the driver may be warned. This allows a driver who has inadvertently caused the vehicle to be operated at risk in an area where there are pedestrians in the vicinity of the vehicle to be warned as such, so that they may take appropriate action to operate the vehicle safely. For example the driver may reduce the vehicle's speed, leave the area, or return to within the road lane markings.

The controller may be configured to reduce the fuel supply to the vehicle if the driver does not take a course of action so as to reduce the at least one risk parameter to within the acceptable level. In another example, the controller may be configured to disable at least one component of a propulsion system of the vehicle if the driver does not take a course of action so as to reduce the at least one risk parameter to within the acceptable level.

The controller may be configured to lock the vehicle's doors. The controller may prevent a manual override to unlock the doors, so as to prevent the driver from exiting the vehicle. This may prevent a driver who was intent on harming pedestrians doing harm outside of the vehicle.

The controller may alert law enforcement authorities, e.g. via a mobile communication connection. The controller may activate hazard warning lights and/or a horn of the vehicle to alert those nearby.

The system may therefore take a course of action so as to prevent the vehicle from colliding with pedestrians (i.e. to stop or slow the vehicle to prevent it travelling further) if no action is taken to reduce the vehicle being at risk.

If the vehicle is being operated dangerously in an area where pedestrians are present then the system presents an opportunity to the driver to reduce the risk. This could be for example by slowing, or leaving the area. If however the driver intentionally operated the vehicle at risk, or has done so unknowingly but not able to correct their driving (e.g. the driver may be intoxicated), then their dangerous control of the vehicle may be overridden. The driver may also be prevented from exiting the vehicle by being locked in. As above, this may only be done if the system has determined that there actually are pedestrians in the area.

If there are two or more risk parameters then they may be assessed either in series or in parallel (e.g., either one after the other or substantially at the same time). Any number of risk parameters may be assessed in series or in parallel or a combination of series and parallel.

Two or more risk parameters may therefore be assessed at substantially the same time. A check for pedestrians may therefore be performed if an overall risk parameter exceeds a certain threshold. For example, the overall risk parameter may be combination of two or more risk parameters being above a certain threshold.

The system may further comprise a lane management system, and the controller may be configured to analyse the at least one risk parameter using data from the lane management system.

### Brief Description of the Drawings

For a better understanding of the present invention, and to show more clearly how it may be carried into effect, reference will now be made, by way of example, to the accompanying drawings in which:
Fig. 1A is an example schematic flow chart of a method according to the invention;
Figs. 1B and 1C are example schematic flow charts of part of the method illustrated in Fig. 1A;
Fig. 2 is a schematic diagram of a system according to the invention;
Fig. 3 is an example schematic flow chart of a method according to the invention; and
Fig. 4 is a schematic diagram of a system according to the invention.

### Detailed Description

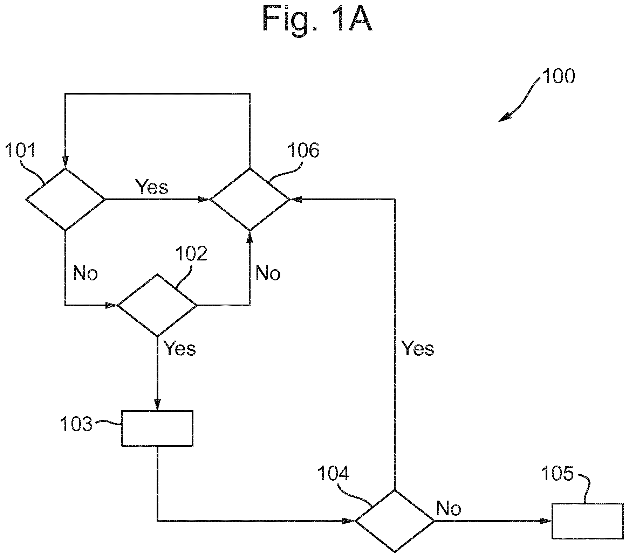

Fig. 1A shows a method 100 of preventing a collision. At step 101 at least one risk parameter is analysed and it is determined if at least one risk parameter is within an acceptable level to determine if the vehicle is being operated at a risk to pedestrians. If it is determined that the at least one risk parameter is not within an acceptable level then the method proceeds to step 102. At step 102 a check for pedestrians in the vicinity of the vehicle is performed.

If, based on the analysis, it is determined that the at least one risk parameter is within an acceptable level then the method proceeds to step 106 in which a period of time elapses before the method returns to step 101. Alternatively, the method may return directly to step 101 without the time delay of step 106.

If, at step 102, it is determined that there are pedestrians in the vicinity of the vehicle then the method proceeds to step 103. At step 103 an alert is issued to the driver of the vehicle.

At step 104 it is determined whether the driver has taken a course of action (which may or may not have been in response to the alert issued at 103) so as to reduce the at least one risk parameter to an acceptable level. At step 104 the method may re-analyse the at least one risk parameter to determine if it is within an acceptable level.

If the driver has not taken any risk reducing action or if the risk parameter remains at an unacceptable level then the method proceeds to step 105. At step 105 manual control of the vehicle is overridden such that the vehicle is slowed or brought to a stop.

If however, at step 104, it is determined that the risk parameter is at an acceptable level (for example as a result of driver intervention at 104 in response to the alert issued at 103) then the method proceeds to step 106 (or back to step 101). As above, at step 106 a period of time elapses before the method returns to step 101. Proceeding to step 101 or 106 following step 104 therefore represents no override by the method 100 of vehicle control.

The risk parameter, assessed at step 101, may comprise at least one of: whether the vehicle is in an urban area, whether the vehicle is being driven at or around the speed limit, and whether the vehicle has departed from road lane markings. The risk parameter may comprise other variables that are indicative of the likelihood of a pedestrian collision. For example, a risk parameter may comprise determining if the vehicle is in a pedestrianised area (e.g. a pedestrian only area except for vehicle access, e.g. vehicle access at certain times of the day). A database of such areas and/or such times may be stored on the vehicle or on an external server which the vehicle may communicate with. The risk parameter may also comprise determining if the vehicle is in an area with a known high pedestrian density, e.g. at certain times. A database of such high pedestrian density areas may be stored on the vehicle and/or a server that the vehicle may consult. The database may comprise the location of such areas and may additionally comprise the time(s) at which the pedestrian density is likely to be high, e.g. due to certain regular times of day in which vehicles are prohibited and/or due to the occurrence of certain events.

A satellite navigation system (e.g. GPS), may assess whether the vehicle is in an urban area. For example, the navigation system may refer to a database of known areas, which may be stored on the vehicle and/or on a server which the vehicle may communicate with. The satellite navigation system and/or a speed sensor may provide the vehicle speed used in the assessment of whether the vehicle is at or within the local speed limit. The local speed limit may be determined by referring to a database of known speed limits at a given location. The speed limit database may be stored on the vehicle and/or on a server which the vehicle may communicate with. The speed limit may additionally or alternatively be determined using on-board vehicle cameras that are configured to read speed limit signs and determine the speed limit. A lane keep assist system may be used to assess whether the vehicle has departed from road lane markings. For example, a system capable of determining the vehicle's position in relation to markings on the road delimiting the individual lanes may determine the vehicle's position on the road relative to the lane markings. The lane keep assist system may therefore by used to sense the vehicle's position in a lane.

RADAR and/or LIDAR and/or a camera and/or at least one parking sensor (e.g. a front-facing parking sensor), or any other sensor, may be used to determine if there are actually any pedestrians in the vicinity of the vehicle.

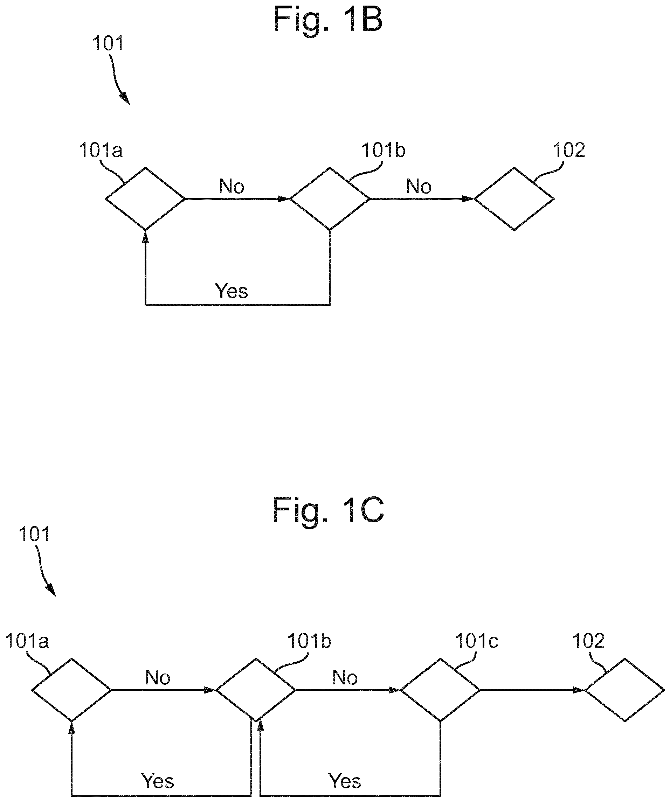

Fig. 1B shows one example of step 101 of method 100. In this example, step 101 comprises assessing two risk parameters to determine whether both risk parameters are within an acceptable level.

In this example, step 101 comprises step 101a in which a first risk parameter is assessed to determine whether the first risk parameter is within an acceptable level. If it is determined that the first risk parameter is within an acceptable level then the method repeats step 101a, e.g. after a predetermined period of time elapses, re-assessing whether the first risk parameter is within the acceptable level. If, at step 101a, it is determined that the first risk parameter is not within an acceptable level then the method proceeds to step 101b. In step 101b a second risk parameter is assessed to determine whether the second risk parameter is within an acceptable level. If it is determined that the second risk parameter is within an acceptable level then the method returns to step 101a (in one example, after a predetermined period of time) to reassess whether the first risk parameter is within an acceptable level. If it is determined that the second risk parameter is not within an acceptable level then the method proceeds to step 102 at which, referring to Fig. 1A, a check is performed for pedestrians in the vicinity of the vehicle.

Step 101 according to the example of Fig. 1B therefore checks for pedestrians if two risk parameters are determined to be at an unacceptable level. If only one risk parameter is within an unacceptable level then the method does not intervene to override manual control, leaving control of the vehicle to the driver. Therefore if only one risk parameter is within an unacceptable level it may be determined that the vehicle is not being operated at a risk to pedestrians. As described, the risk parameters are assessed in series although, as will be described in more detail below, the risk parameters may be assessed in parallel.

The risk parameters may be assessed at substantially the same time and a check for pedestrian may be performed if an overall risk parameter exceeds a threshold. For example, at least two of: whether the vehicle is in an urban area, whether the vehicle is being driven at or around the speed limit, and whether the vehicle has departed from road lane markings, may be determined. For example, an overall threshold may be whether the vehicle has departed from the lane markings by a minimum set distance (e.g. 1 foot) and whether the vehicle is being driven in a pedestrianised area (which may be a subset of a urban area). The combination of these two parameters may represent an overall risk parameter and if both are true (e.g. over 1 foot and a pedestrianised area) then the overall risk parameter may be determined to be above the predetermined threshold and a check for pedestrians may be performed.

Fig. 1C shows one example of step 101 of method 100. In this example, step 101 comprises assessing three risk parameters to determine whether both risk parameters are within an acceptable level.

Step 101 comprises step 101a in which a first risk parameter is assessed to determine whether the first risk parameter is within an acceptable level. If it is determined that the first risk parameter is within an acceptable level then a predetermined period of time elapses before re-assessing whether the first risk parameter is within the acceptable level, i.e. before returning to step 101a. If it is determined that the first risk parameter is not within an acceptable level then the method proceeds to step 101b. In step 101b a second risk parameter is assessed to determine whether the second risk parameter is within an acceptable level. If it is determined that the second risk parameter is within an acceptable level then the method returns to step 101a (in one example, after a predetermined period of time) to reassess whether the first risk parameter is within an acceptable level. If it is determined that the second risk parameter is not within an acceptable level then the method proceeds to step 101c. In step 101c a third risk parameter is assessed to determine whether the third risk parameter is within an acceptable level. If it is determined that the third risk parameter is within an acceptable level then the method returns to step 101b (in one example, after a predetermined period of time) to reassess whether the second risk parameter is within an acceptable level. If it is determined that the third risk parameter is not within an acceptable level then the method may proceed to step 102 which, as per Fig. 1A, a check is performed for pedestrians in the vicinity of the vehicle.

Accordingly, step 101 according to the example of Fig. 1C checks for pedestrians if three risk parameters are determined to be at an unacceptable level. If only one risk parameter, or only two risk parameters, is within an unacceptable level then the method does not intervene to override manual control, leaving control of the vehicle to the driver. Therefore if only one risk parameter, or two, risk parameters, is within an unacceptable level it may be determined that the vehicle is not being operated at a risk to pedestrians.

Although Fig. 1C depicts the method step 101 returning to step 101b, if it is determined at step 101c that the third risk parameter is at an acceptable level this is one example only. According to another example if, at step 101c, it is determined that the third risk parameter is within an acceptable level the method may return to step 101a.

As described the risk parameters are assessed in series. Alternatively, the risk parameters may be assessed in parallel (e.g. at substantially the same time). The results may be aggregated and compared to a threshold to determine if an overall risk parameter has been exceeded. Furthermore, although two and three risk parameters have been described it is also envisaged that other numbers of risk parameters may be assessed. For example, any number of risk parameters may be assessed in series or in parallel or a combination of series and parallel.

Returning to Fig. 1A, step 102 may comprise checking if there are pedestrians present within a predetermined radius from the vehicle.

Step 106 may represent a system (performing method 100) being dormant for a period of time. The period of time may be predetermined. In one example, step 106 may represent the end of method 100.

In one example, the alert issued at 103 may comprise a signal to the driver that the at least one risk parameter is at an unacceptable level. In another example, the alert issued at 103 may comprise an instruction to the driver to take action so that the at least one parameter can move to within an acceptable level.

For example, the alert issued to the driver may comprise an instruction to reduce the vehicle's speed, leave the area in which the vehicle is currently being driven, and/or keep within the road lane markings.

Accordingly, a driver of the vehicle who has inadvertently operated the vehicle at risk to pedestrians may be warned as such and can take appropriate action to reduce any danger to pedestrians.

At step 104 it may be effectively re-determined whether the at least one parameters is at an unacceptable level. Step 104 may therefore comprise an assessment of whether the at least one parameter has changed. If there is no change from the previously detected unacceptable level, then the method may proceed to step 105. However, if a change in the level of the at least one parameter is detected but despite the change the parameter remains at an unacceptable level then the method may still proceed to step 105.

Therefore, a driver who wishes to cause harm to pedestrians but nevertheless, in the course of doing so, may take an action that will reduce the at least one parameter to a level approaching acceptable, but not yet at an acceptable level, will still have their control overridden at step 105.

For example, at step 105 the system may restrict inlet gases into the engine, apply brakes, cut off the vehicle's fuel system, or disable the vehicle's propulsion system.

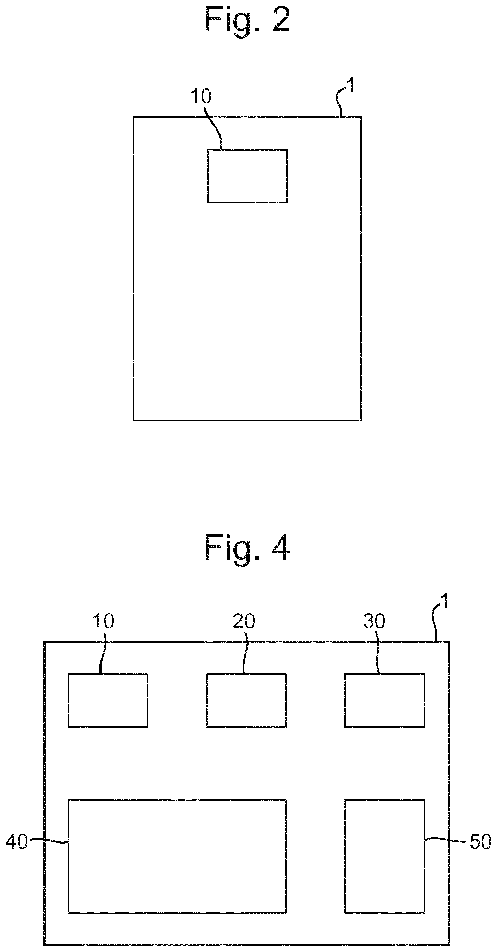

Fig. 2 shows a collision avoidance system 1 comprising a controller 10. Controller 10 is configured to analyse if at least one risk parameter is within an acceptable level to determine when the vehicle is being operated at a risk to pedestrians and, if it is determined that the at least one risk parameter is over the acceptable level; check for pedestrians in the vicinity of the vehicle; and in response to a determination that there are pedestrians in the vicinity of the vehicle, issue an alert to the driver; and if the driver takes a course of action so as to reduce the at least one risk parameter to within the acceptable level, not intervene so as to allow the driver manual control of the vehicle; if the driver does not take a course of action so as to reduce the at least one risk parameter to within the acceptable level, override manual control of the vehicle to slow the vehicle or bring the vehicle to a stop.

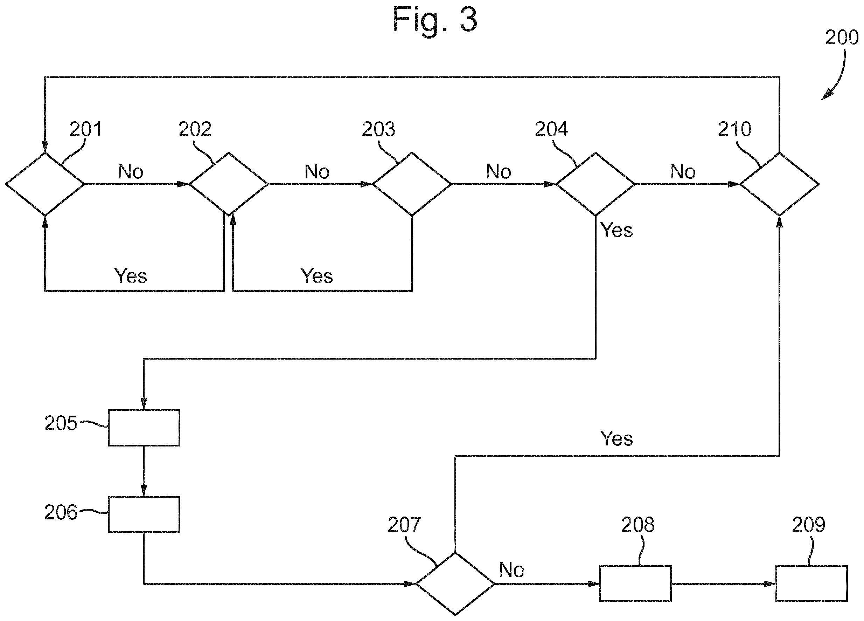

Fig. 3 shows a method 200 of preventing a collision according to a particular example of the present disclosure.

The method begins at step 201 in which a first risk parameter is assessed to determine if the first risk parameter is within an acceptable level. If it is not then the method proceeds to step 202. At step 202 a second risk parameter is assessed to determine if the second risk parameter is within an acceptable level. If it is not then the method proceeds to step 203. At step 203 a third risk parameter is assessed to determine if the third risk parameter is within an acceptable level. If it is not then the method proceeds to step 204.

If, at step 202, it is determined that the second risk parameter is within an acceptable level then the method proceeds to step 201. If at step 203 it is determined that the third risk parameter is within an acceptable level then the method proceeds to step 202, or (not shown in Fig. 3) the method may proceed to step 201.

At step 204 a check for pedestrians in the vicinity of the vehicle is performed. If it is determined that there are no pedestrians or if it determined that there are unlikely to be pedestrians in the vicinity of the vehicle then the method proceeds to step 210. At step 210 the method proceeds to step 201, for example after a predetermined time period has elapsed.

If it is determined that there are pedestrians in the vicinity of the vehicle then the method proceeds to step 205. At step 205 the speed of the vehicle may be automatically reduced, e.g. to a predetermined value, such as 5mph (approx. 8km/h). At step 206 an alert is issued to the driver. The alert issued at 206 may be an alert to maintain the speed (which may have been automatically reduced at 205).

At step 207 it may be determined if at least one of the risk parameters (assessed at 201, 202 and 203) is within an acceptable level. If none of the risk parameters are within an acceptable level then the method proceeds to step 208. At step 208 the speed of the vehicle may be reduced. At step 209 the doors of the vehicle may be locked.

If it is determined at step 207 that at least one of the risk parameters is within an acceptable level then the method proceeds to step 210. At step 210 the method proceeds to step 201, e.g. after a predetermined time period has elapsed.

The risk parameters, assessed at steps 201, 202 and 203, may comprise at least one of: whether the vehicle is in an urban area, whether the vehicle is being driven at or around the speed limit, and whether the vehicle has departed from road lane markings. For example, in step 201 it may be determined if the vehicle is an urban (e.g. suburban) area. For example, in step 202 it may be determined if the vehicle is being driven at a speed substantially equal to the local speed limit. For example, in step 203 it may be determined whether the vehicle has departed from any road lane markings.

As described above with reference to Figure 1, a satellite navigation system (e.g. GPS), may assess whether the vehicle is in an urban area. For example, the navigation system may refer to a database of known areas, which may be stored on the vehicle and/or on a server which the vehicle may communicate with. The satellite navigation system and/or a speed sensor may provide the vehicle speed used in the assessment of whether the vehicle is at or within the local speed limit. The local speed limit may be determined by referring to a database of known speed limits at a given location. The speed limit database may be stored on the vehicle and/or on a server which the vehicle may communicate with. The speed limit may additionally or alternatively be determined using on-board vehicle cameras that are configured to read speed limit signs and determine the speed limit. A lane keep assist system may be used to assess whether the vehicle has departed from road lane markings. For example, a system capable of determining the vehicle's position in relation to markings on the road delimiting the individual lanes may determine the vehicle's position on the road relative to the lane markings. The lane keep assist system may therefore by used to sense the vehicle's position in a lane.

As also described above with reference to Figure 1, RADAR and/or LIDAR and/or a camera and/or at least one parking sensor (e.g. a front-facing parking sensor), or any other sensor, may be used (at step 204) to determine if there are actually any pedestrians in the vicinity of the vehicle.

At step 205 the speed of the vehicle may be reduced to 5mph (approx. 8km/h).

At step 206 the request to the driver may be an alert to reduce the speed of the vehicle. In another example the alert may be a recommendation to reduce one of the risk parameters to within an acceptable level. For example, the alert may comprise a warning to leave the area or return to a position within the road lane markings or further reduce the vehicle's speed.

At 207 it may be determined that the driver has taken a course of action to reduce one of the risk parameters to within an acceptable level. For example, the vehicle may have returned to a road lane, e.g. returned to within road lane markings.

At step 208, to reduce the speed of the vehicle, the brakes may be applied for a fixed period of time. This will prevent the vehicle from moving. Alternatively, or in addition, the fuel supply may be cutoff, and/or the vehicle's propulsion system may be disabled.

At step 209 the vehicle is locked to prevent the driver leaving the vehicle.

Fig. 4 shows a collision avoidance system 1. The collision avoidance system 1 of Fig. 4 may perform the method of Fig. 3 (and/or the method of Fig. 5 to be described later).

System 1 comprises a controller 10, navigation unit 20 (such as satellite navigation or GPS), lane management system 50, speed sensor 30, and pedestrian-detection unit 40. Pedestrian-detection unit 40 may comprise at least one of radar, camera, and a distance or parking sensor.

Controller 10 is configured to analyse if at least one risk parameter is within an acceptable level to determine when the vehicle is being operated at a risk to pedestrians and, if it is determined that the at least one risk parameter is over the acceptable level; check for pedestrians in the vicinity of the vehicle. Controller 10 may be configured to use data from navigation unit 20 or speed sensor 30 to determine if the vehicle is being operated at or within the local speed limit. Controller 10 may be configured to use data from navigation unit 20 to determine whether the vehicle is in an urban area. Controller 10 may be configured to use data from lane management system 50 to determine whether the vehicle is being operated outside of a lane. Controller 10 may be configured to use pedestrian-detection unit 40 (e.g. radar, camera, parking sensor etc.) to determine whether there are pedestrians in the vicinity of the vehicle.

In response to a determination that there are pedestrians in the vicinity of the vehicle, the controller 10 may be configured to issue an alert to the driver; and if the driver takes a course of action so as to reduce the at least one risk parameter to within the acceptable level, not intervene so as to allow the driver manual control of the vehicle; if the driver does not take a course of action so as to reduce the at least one risk parameter to within the acceptable level, override manual control of the vehicle to slow the vehicle or bring the vehicle to a stop.

Controller 10 may be configured to apply the vehicle's brakes, reduce the vehicle's speed, cut off the fuel system (or fuel supply to the engine), and/or disable the vehicle's propulsion system. Controller 10 is also configured to lock the vehicle. The controller 10 may be configured to perform any of these functions and then prevent them from a subsequent manual override by any person, e.g. the driver of the vehicle.

The controller 10 may alert law enforcement authorities, e.g. via a mobile communication connection. The controller 10 may activate hazard warning lights and/or a horn of the vehicle to alert those nearby.

Returning to Fig. 3, one example arrangement of a method 200 of preventing a collision will now be described.

At step 201 the speed of the vehicle is analysed to determine if the vehicle is being operated at a speed within the local speed limit. If no, i.e. if it is determined that the vehicle is being operated above the local speed limit, then the method proceeds to step 202.

At step 202 the location of the vehicle is analysed to determine if the vehicle is being operated in an area deemed free of pedestrians. If no, i.e. if it is determined that the vehicle is being operated in an urban area, then the method proceeds to step 203. If not then the method returns to step 201.

At step 203 the vehicle's relative position is analysed to determine if the vehicle is within the lane markings on the road. If no, i.e. if it is determined if the vehicle is outside the lane markings, then the method proceeds to step 204. If not then the method may return to step 202 (in one example the method may return to step 201).

At step 204 it is checked whether there are pedestrians in the vicinity of the vehicle.

At step 205 the speed of the vehicle is reduced and at step 206 an alert is issued to the driver. At 207 the risk parameters may be re-analysed to determine if one of them is within an acceptable level. If not the method proceeds to steps 208 and 209. At step 208 the speed of the vehicle may be reduced and at step 209 the vehicle may be locked.

At step 210 the method 200 may return to step 201. At step 210 any system for performing method 200 may remain dormant for a predetermined period of time before performing step 201 again.

Therefore, according to method 200 it may be first checked whether the driver of a vehicle is speeding. This alone may not constitute a substantial threat to any pedestrians nearby (if any). It is also determined if the vehicle is in an urban area (for example a suburban area). Being in an urban area may increase the likelihood of pedestrians being in the vicinity of the vehicle (compared to, for example, a rural area). It is also determined if the vehicle is outside its lane. The combination of these three factors may represent the vehicle being operated at a risk to pedestrians, and may therefore constitute the vehicle being operated in a threatening way.

If there are no pedestrians in the vicinity of the vehicle then the method may not intervene to override manual control. If, however, there are pedestrians in the vicinity of the vehicle then it may be determined that the vehicle is being operated in a dangerous way and the method overrides manual control to slow the vehicle.

For example at step 205 the speed of the vehicle may be reduced so as to pose less of a risk to pedestrians, but an alert 206 may nevertheless be issued to the driver if the actions at steps 205 and 206 are insufficient to bring at least one risk parameter back to an acceptable level. It will be appreciated that the order of steps 201, 202 and 203 in this described example may be changed (e.g. reversed). Accordingly the method may first analyse the location of the vehicle to determine if the vehicle is being operated in an urban area. If it is then the method may proceed to analyse the speed of the vehicle etc.

It will be appreciated that the steps 201, 202 and 203 described in this example may be performed substantially at the same time. In this example the method may check for pedestrian presence at step 204 if an overall risk parameter, or overall threshold has been exceeded. For example, the overall risk parameter could be if the vehicle is being operated at above a certain speed over the local limit (e.g. over 10mph (approx. 16 km/h) above the local limit) and if the vehicle is outside the lane by a minimum distance.

One example of an urban area may be an area with relatively high population density, for example a suburban area such as a street in a neighbourhood, or a city. In another example an urban area may be any area that is not considered a rural area. In another example, an urban area may be an area with a population density of over 1000 people per square mile.

The risk parameters may be pre-set. For example, the population density for the system to determine that the vehicle is operating within an urban area may be changed by a user. Alternatively, specific geographic areas (e.g. regions, or individual towns or cities) may be selected by a user.

The speed above which the system may determine to be an unacceptable speed may be pre-set. For example, the speed may be set to a national standard, for example 30mph (approx. 48km/h) or 50mph (approx. 80km/h).

The present invention may prevent an incident in which injuries could have otherwise occurred. If a driver is operating the vehicle with the intention of driving it into a crowded area of pedestrians, then the system may override manual control and may prevent the driver from escaping. The driver may then be arrested. For example, a driver intent on doing harm to a crowd of people may accelerate the vehicle in an urban area and will necessarily have to depart from lane markings to mount the vehicle on a curb. The system will detect that each risk parameter is unacceptable and check for pedestrians. Upon a determination that pedestrians are present then the present invention can act to bring the vehicle to a stop and lock the vehicle such that these last two actions cannot be overridden by the driver locked in the vehicle.

The following numbered statements form part of the present disclosure:
1. A collision avoidance system for a vehicle comprising a controller configured to:
   analyse if at least one risk parameter is within an acceptable level (e.g. to determine when the vehicle is being operated at a risk to pedestrians) and, if it is determined that the at least one risk parameter is over the acceptable level:
   check for pedestrians in the vicinity of the vehicle; and
   in response to a determination that there are pedestrians in the vicinity of the vehicle, issue an alert to the driver; and
   if the driver takes a course of action so as to reduce the at least one risk parameter to within the acceptable level, not intervene so as to allow the driver manual control of the vehicle;
   if the driver does not take a course of action so as to reduce the at least one risk parameter to within the acceptable level, override manual control of the vehicle to slow the vehicle or bring the vehicle to a stop.
2. The collision avoidance system of statement 1 wherein the risk parameter is at least one of: (i) the proximity of the vehicle to an urban area; (ii) whether the vehicle is substantially within the local speed limit; (iii) whether the vehicle is within the lane markings on the road.
3. The collision avoidance system of statement 1 or 2 wherein the alert to the driver comprises a recommended course of action.
4. The collision avoidance system of statement 3 wherein the alert to the driver comprises a request to reduce the speed of the vehicle.
5. The collision avoidance system of any preceding statement wherein the controller is configured to reduce the fuel supply to the vehicle if the driver does not take a course of action so as to reduce the at least one risk parameter to within the acceptable level.
6. The collision avoidance system of any preceding statement wherein the controller is configured to apply brakes of the vehicle and/or disable at least one component of a propulsion system of the vehicle if the driver does not take a course of action so as to reduce the at least one risk parameter to within the acceptable level.
7. The collision avoidance system of any preceding statement wherein the controller is configured to lock the vehicle's doors.
8. The collision avoidance system of statement 7 further comprising preventing manual override to unlock the doors, so as to prevent the driver from exiting the vehicle.
9. The collision avoidance system of any preceding statement further comprising a lane management system, and wherein the controller is configured to analyse the at least one risk parameter using data from the lane management system.
10. The collision avoidance system of any preceding statement wherein the controller is configured to alert a law enforcement authority and/or actuate a hazard warning system, e.g. hazard lights on a motor vehicle.
11. A method of preventing a collision, the method comprising:
   analysing if at least one risk parameter is within an acceptable level (e.g. to determine when a vehicle is being operated at a risk to pedestrians), and, if it is determined that the at least one risk parameter is over the acceptable level;
   checking for pedestrians in the vicinity of the vehicle, and in response to a determination that there are pedestrians in the vicinity of the vehicle,
   issuing an alert to the driver; and, if the driver does not take a course of action so as to reduce the at least one risk parameter to within the acceptable level,
   overriding manual control of the vehicle to slow the vehicle or bring the vehicle to a stop.
12. The method of statement 11 wherein the risk parameter is at least one of: (i) the proximity of the vehicle to an urban area; (ii) whether the vehicle is substantially within the local speed limit; (iii) whether the vehicle is within the lane markings on the road.
13. The method of statement 11 or 12 further comprising at least one of:
   reducing the fuel supply to the vehicle;
   applying brakes of the vehicle; and
   disabling at least one component of a vehicle propulsion system.
14. The method of any one of statements 11-13 wherein issuing the alert comprises recommending a course of action to the driver to reduce the risk parameter to an acceptable level.
15. The method of any one of statements 11-14 further comprising locking the vehicle.
16. The method of statement 15 further comprising preventing manual override to unlock the vehicle.
17. The method of any preceding statement further comprising alerting a law enforcement authority and/or a hazard warning system.
18. A collision avoidance system, or a method of preventing a collision, according to any preceding statement, wherein the risk parameter may comprise determining if the vehicle is in a pedestrianised area and/or wherein the risk parameter may comprise determining if the vehicle is in an area of known high pedestrian density.
19. A collision avoidance system according to any of statements 1-10 further comprising a database, and wherein the database comprises at least one of data concerning: pedestrianised areas, local speed limits, areas of high population density, local events. A collision avoidance method according to any of statements 11-18 further comprising the step of accessing such a database.
20. A collision avoidance system, or a method of preventing a collision, according to any preceding statement wherein determining if the at least one risk parameter is over the acceptable level comprises determining if at least two risk parameters are over an acceptable threshold.
21. A collision avoidance system, or a method of preventing a collision, according to any preceding statement wherein determining if the at least one risk parameter is over the acceptable level comprises determining if an aggregate risk parameter of at least two risk parameters is over an acceptable level.
22. A collision avoidance system, or a method of preventing a collision, according to any preceding statement wherein the vehicle is a motor vehicle.

It will be appreciated by those skilled in the art that although the invention has been described by way of example with reference to one or more examples, it is not limited to the disclosed examples and that alternative examples could be constructed without departing from the scope of the invention as defined by the appended claims.

## Claims

1. A collision avoidance system for a vehicle comprising a controller configured to:
analyse if at least one risk parameter is within an acceptable level to determine when the vehicle is being operated at a risk to pedestrians and, if it is determined that the at least one risk parameter is over the acceptable level:
check for pedestrians in the vicinity of the vehicle; and
in response to a determination that there are pedestrians in the vicinity of the vehicle, issue an alert to the driver; and
if the driver takes a course of action so as to reduce the at least one risk parameter to within the acceptable level, not intervene so as to allow the driver manual control of the vehicle;
if the driver does not take a course of action so as to reduce the at least one risk parameter to within the acceptable level, override manual control of the vehicle to slow the vehicle or bring the vehicle to a stop.

2. The collision avoidance system of claim 1 wherein the risk parameter is at least one of: (i) the proximity of the vehicle to an urban area; (ii) whether the vehicle is substantially within the local speed limit; (iii) whether the vehicle is within the lane markings on the road.

3. The collision avoidance system of claim 1 or 2 wherein the alert to the driver comprises a recommended course of action.

4. The collision avoidance system of claim 3 wherein the alert to the driver comprises a request to reduce the speed of the vehicle.

5. The collision avoidance system of any preceding claim wherein the controller is configured to reduce the fuel supply to the vehicle if the driver does not take a course of action so as to reduce the at least one risk parameter to within the acceptable level.

6. The collision avoidance system of any preceding claim wherein the controller is configured to apply brakes of the vehicle and/or disable at least one component of a propulsion system of the vehicle if the driver does not take a course of action so as to reduce the at least one risk parameter to within the acceptable level.

7. The collision avoidance system of any preceding claim wherein the controller is configured to lock the vehicle's doors.

8. The collision avoidance system of claim 7 further comprising preventing manual override to unlock the doors, so as to prevent the driver from exiting the vehicle.

9. The collision avoidance system of any preceding claim further comprising a lane management system, and wherein the controller is configured to analyse the at least one risk parameter using data from the lane management system.

10. A method of preventing a collision, the method comprising:
analysing if at least one risk parameter is within an acceptable level to determine when a vehicle is being operated at a risk to pedestrians, and, if it is determined that the at least one risk parameter is over the acceptable level;
checking for pedestrians in the vicinity of the vehicle, and in response to a determination that there are pedestrians in the vicinity of the vehicle,
issuing an alert to the driver; and, if the driver does not take a course of action so as to reduce the at least one risk parameter to within the acceptable level,
overriding manual control of the vehicle to slow the vehicle or bring the vehicle to a stop.

11. The method of claim 10 wherein the risk parameter is at least one of: (i) the proximity of the vehicle to an urban area; (ii) whether the vehicle is substantially within the local speed limit; (iii) whether the vehicle is within the lane markings on the road.

12. The method of claim 10 or 11 further comprising at least one of:
reducing the fuel supply to the vehicle;
applying brakes of the vehicle; and
disabling at least one component of a vehicle propulsion system.

13. The method of any one of claims 10-12 wherein issuing the alert comprises recommending a course of action to the driver to reduce the risk parameter to an acceptable level.

14. The method of any one of claims 10-13 further comprising locking the vehicle.

15. The method of claim 14 further comprising preventing manual override to unlock the vehicle.
